# EUROPEAN PATENT APPLICATION

(11) **EP 4 582 782 A1**
(43) Date of publication of application: **09.07.2025**
(21) Application number: 25150359.5
(22) Date of filing: 06.01.2025
(51) Int. Cl.: G01L 3/10

(54) **TORQUE MEASUREMENT SYSTEM FOR AIRCRAFT ENGINES**

(30) Priority: 05.01.2024 US 202418405113
(71) Applicant: PRATT & WHITNEY CANADA CORP., Longueuil, Québec J4G 1A1 (CA)
(72) Inventor: HEYERMAN, Jeffrey Bernard, (01BE5) Longueuil, J4G 1A1 (CA)
(74) Representative: Dehns

(57) **Abstract**

A torque measurement system (50; 150) for an aircraft propulsor (10) including a reduction gearbox (31) includes generally a first toothed wheel (52) mounted to a loaded shaft (54), a second toothed wheel (56) mounted to a torque reference tube (58; 158) radially spaced apart from the loaded shaft (54) and concentric therewith, and a torque probe (20) located proximate the first and second toothed wheels (52, 56). A frustoconical element (60, 62) is located proximate an input end (47) of the loaded shaft (54), the frustoconical element (60, 62) having an annular body (65) radially disposed between the loaded shaft (54) and the torque reference tube (58; 158) and being mounted for rotation with one of the two. The frustoconical element (60, 62) includes a frustoconical surface (61, 63) that abuts a complementary running surface. The frustoconical surface (61, 63) of the frustoconical element (60, 62) and the complementary running surface rotate relative to each other and define a contact interface (90), the contact interface (90) being annular and oriented at an angle (θ) relative to the central axis (11).

## Description

### TECHNICAL FIELD

The disclosure relates generally to aircraft propulsion systems and, more particularly, to torque measuring systems for such propulsion systems.

### BACKGROUND

Aircraft propulsion systems, and particularly turboprop and turboshaft engines, often have torque measurement systems (also referred to as torque metering systems) which are used by the electronic engine control (EEC) for measuring the torque generated by one or more shafts of the engine, which may then be used for engine control.

Such torque metering systems (TQMS) sometimes include a torque probe and two toothed wheels, wherein one toothed wheel is mounted to a loaded shaft and another toothed wheel is mounted on a reference (unloaded) shaft, with a compliant torsional load path connecting them. This allows for the development of a relative rotational displacement between the teeth on the two toothed wheels. As the toothed wheels spin when the engine is in operation, the torque probe detects the passing teeth by determining the time between teeth and/or between respective teeth sets of the two toothed wheels and uses this to determine the engine torque.

While existing TQMS may be suitable for their intended purposes, improvements are sought.

### SUMMARY

In one aspect of the present invention, there is provided a torque measurement system for an aircraft propulsor including a reduction gearbox, comprising: a first toothed wheel mounted to a loaded shaft of the torque measurement system, the loaded shaft being rotatable about a central axis and having an input end (configured to be) driven by an output shaft of the aircraft propulsor and an output end (configured to) transmitting torque to the reduction gearbox; a second toothed wheel mounted to a torque reference tube radially spaced apart from the loaded shaft and concentric therewith; a torque probe located proximate the first toothed wheel and the second toothed wheel, the torque probe (configured to be) in communication with a controller of the aircraft propulsor for determining the torque transmitted by the output shaft based on a difference in relative position between teeth on the first and second toothed wheels; and a frustoconical element located proximate the input end of the loaded shaft, the frustoconical element comprising an annular body radially disposed between the loaded shaft and the torque reference tube and being mounted to one of the loaded shaft and the torque reference tube for rotation therewith, the frustoconical element including a frustoconical surface facing towards the other of the loaded shaft and the torque reference tube and abutting a complementary running surface, wherein the frustoconical surface of the frustoconical element and the complementary running surface rotate relative to each other and define a contact interface, the contact interface being annular and oriented at an angle (i.e., a non-zero angle) relative to the central axis. Another aspect provides a system comprising an aircraft propulsor including a reduction gearbox, and the torque measurement system.

The torque measurement system as defined above and described herein may also include one or more of the following features, in whole or in part, and in any combination.

In an embodiment of the above, the frustoconical element is a first frustoconical element fixed to the loaded shaft, and the torque measurement system includes a second frustoconical element fixed to the torque reference tube, the complementary running surface being a second frustoconical surface of the second frustoconical element.

In an embodiment according to any of the previous embodiments, the frustoconical surface of the first frustoconical element faces radially outward toward the torque reference tube, and the second frustoconical surface of the second frustoconical element facing radially inward toward the loaded shaft.

In an embodiment according to any of the previous embodiments, the frustoconical surface of the first frustoconical element faces axially forward and the second frustoconical surface of the second frustoconical element faces axially rearward.

In an embodiment according to any of the previous embodiments, the angle of the contact interface is an acute angle relative to the central axis.

In an embodiment according to any of the previous embodiments, the angle is between 0 and 45 degrees.

In an embodiment according to any of the previous embodiments, the angle is between 20 and 30 degrees.

In an embodiment according to any of the previous embodiments, the frustoconical surface of the frustoconical element and the complementary running surface at least partially axially overlap the teeth on the first toothed wheel and/or the second toothed wheel.

In an embodiment according to any of the previous embodiments, a common axial plane that is perpendicular to the central axis interests all of: the teeth on the first toothed wheel; the teeth the second toothed wheel; the frustoconical surface; and the complementary running surface.

In an embodiment according to any of the previous embodiments, an axial locating element is located proximate to the output end of the loaded shaft, the axial locating element acting between an annular flange on the loaded shaft and a opposing flange on the torque reference tube.

In an embodiment according to any of the previous embodiments, the axial locating element is an axial shim that has an axial thickness configured to generate an axial preload force between the frustoconical surface and the complementary running surface.

In an embodiment according to any of the previous embodiments, the torque reference tube includes an annular wall that has a plurality of undulations therein.

In an embodiment according to any of the previous embodiments, the annular wall of the torque reference tube is crenulated and formed by a plurality of interconnected and integrally formed axially extending wall segments and radially extending wall segments.

In another aspect of the present invention, there is also provided a torque measurement system for an aircraft propulsor, comprising: a first shaft having a first set of teeth fixed thereto, the first shaft being rotatable about a central axis; a second shaft concentrically disposed relative to the first shaft and being radially spaced apart therefrom, the second shaft having a second set of teeth fixed thereto; a torque probe located proximate the first set of teeth and the second set of teeth, the torque configured for determining torque transmitted by the first shaft based on a difference in relative position between first set of teeth and the second set of teeth; and a first frustoconical element mounted on the first shaft and having a first frustoconical surface thereon, and a second frustoconical element mounted on the second shaft and having a second frustoconical surface thereon, the first and second frustoconical elements rotating relative to each other with the first and second frustoconical surfaces abutting each other.

The torque measurement system as defined above and described herein may also include one or more of the following features, in whole or in part, and in any combination.

In an embodiment of the above, the first and second frustoconical surfaces define a contact interface therebetween, the contact interface being annular and oriented at an angle relative to the central axis.

In an embodiment according to any of the previous embodiments, the angle is between 20 and 30 degrees.

In an embodiment according to any of the previous embodiments, the first and second frustoconical surfaces at least partially axially overlap first set of teeth and/or the second set of teeth.

In an embodiment according to any of the previous embodiments, a common axial plane that is perpendicular to the central axis interests all of the first and second frustoconical surfaces, the first set of teeth and the second set of teeth.

In an embodiment according to any of the previous embodiments, comprising an axial shim disposed between the first and second shafts at an end thereof opposite the first and second frustoconical elements, the axial shim having an axial thickness configured to generate an axial preload force between the first and second frustoconical surfaces.

In an embodiment according to any of the previous embodiments, the second shaft defines an annular wall radially that has a plurality of undulations therein, the undulations forming crenelations comprising a plurality of interconnected and integrally formed axially extending wall segments and radially extending wall segments.

### BRIEF DESCRIPTION OF THE DRAWINGS

Reference is now made to the accompanying figures in which:
Fig. 1 is a schematic cross-sectional view of an aircraft propulsor;
Fig. 2 is an enlarged cross-sectional view of the region 2-2 in Fig. 1, showing a torque metering system (TQMS) of the propulsor;
Fig. 3A is a partial cross-sectional view of the TQMS of Fig. 2, showing a reference tube and a loaded tube/shaft configured to transmit torque from an engine core to a reduction gearbox (RGB);
Fig. 3B is an enlarged cross-section view taken from region 3B-3B in Fig. 3A; and
Fig. 4 is a partial cross-sectional view of another embodiment of the TQMS, including an alternate reference tube and the loaded tube/shaft.

### DETAILED DESCRIPTION

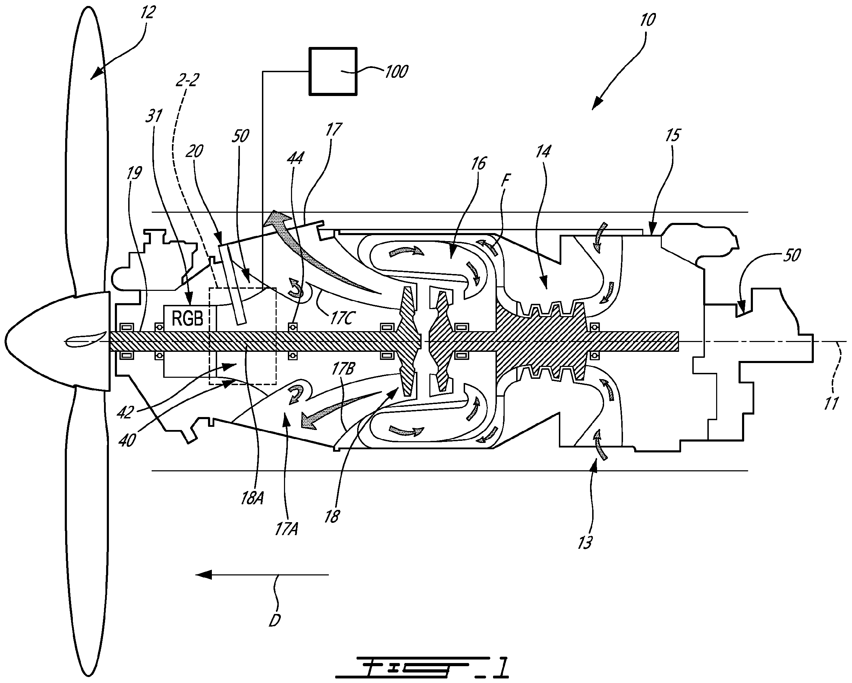

Fig. 1 illustrates an aircraft propulsor 10 of a type preferably provided for use in subsonic flight. A "propulsor" as used is understood to be any engine or motor (or combination of thereof) suitable to be used for providing propulsion to an aircraft (fixed wing or rotary (e.g., helicopter). The propulsor 10 may for example be a thermal engine (such as, but not limited to, a gas turbine engine), an electric motor, or a hybrid propulsion system that includes an electric motor and a thermal engine. In the case of thermal engines, the propulsor 10 may be a gas turbine engine of the type used to drive a propeller (e.g., a turboprop engine) or a helicopter rotor (e.g., a turboshaft engine). Therefore, while the exemplary propulsor 10 depicted in Fig. 1 is a turboprop engine, it is to be understood that the propulsor 10 as described herein may be other types of propulsors/propulsion systems, such as those provided above. The propulsor 10 (which may also be referred to herein as "engine" 10) as shown in Fig. 1 is a turboprop engine, generally comprising in serial flow communication an air inlet 13 through which air enters the engine, a compressor section 14 for pressurizing the air, a combustor 16 in which the compressed air is mixed with fuel and ignited for generating an annular stream of hot combustion gases, and a turbine section 18 for extracting energy from the combustion gases. The aircraft propulsor 10 defines a longitudinal center axis 11 about which many of its components rotate. The turbine section 18 drives a propeller 12, via a reduction gear box (RGB) 31 that drives a propeller shaft 19. In Fig. 1, the propeller 12 is located at a forward end of the aircraft propulsor 10, relative to a direction of travel D of the aircraft to which the engine is mounted.

The internal components of the aircraft propulsor 10 (also referred to herein simply as the "engine 10") are housed in a casing 15. The casing 15 is an annular body defining an interior of the engine 10 which houses the turbomachinery and other components of the engine 10. The casing 15 may be made up of multiple casing segments, or cases, which are axially adjacent to each other and connected to one another. One or more exhaust ducts 17 define a flow path from the exit of the turbine section 18 to convey the combustion gases out of the casing 15 and away from the engine 10 via an exhaust outlet 17A.

As noted above, the engine 10 depicted in Fig. 1 is a turboprop engine which may be particularly well suited for the torque measurement system as described herein due to the significant propeller trunnion 1P moments to which they are exposed during operation, however the engine as described herein may also be another type of propulsor for an aircraft. It is to be understood that the torque measurement system, as will be described in further detail below, can be applied to any suitable type of thermal, electric or hybrid (e.g., thermal and electric) propulsion unit configured for use in an aircraft.

Referring still to Fig. 1, an output shaft 18A, which is driven by the turbine section 18 of the engine 10, is drivingly connected with, provides torque to, the RGB 31. The RGB 31 is a speed reducing gearbox and provides torque output, at a lower rotational speed, to the propeller 12. In the embodiment of Fig. 1, the RGB 31 is disposed axially between the turbine section 18 and the propeller 12. The output shaft 18A of the engine 10 is thus drivingly connected to the propeller 12 via the RGB 31. The RGB 31 processes and outputs the rotational drive transferred thereto from the turbine section 18 via the output shaft 18A through known gear reduction techniques. The RGB 31 allows for the propeller 12 to be driven at its optimal rotational speed, which is less than the rotational speed of the turbine section 18.

The engine 10 includes one or more bearing housings 40 disposed within, and housed by, the engine casing. The bearing housing 40 defines an internal bearing cavity 42 in which one or bearings 44 are located. The bearings 44 engage and support a rotating shaft of the engine 10, such as the output shaft 18A. The bearing housing 40 and the bearing cavity 42 may be sealed off from a remainder of the internal volume of the engine to prevent oil or an oil mist from escaping the bearing cavity 42. The pressure within the bearing housing 40, or the pressure of the bearing cavity 42, may thus be different than a pressure within the remainder of the casing. The engine 10 may also have other bearing housings 40 to enclose other bearings 44 of the engine 10, which support other shafts or different portions of the output shaft 18A.

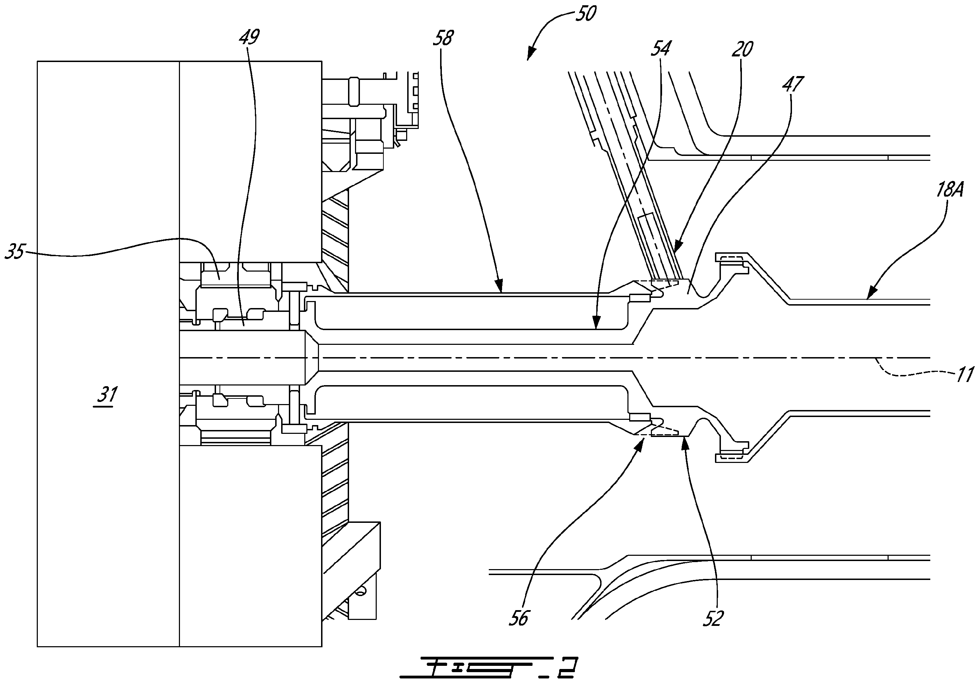

Referring now to Fig. 1 and Fig. 2, the engine 10 includes a torque measurement system (TQMS) 50, which may also be referred to herein a torque meter or torque metering system. The TQMS 50 is connected to an electronic controller 100, which may in certain embodiments be an electronic engine controller (EEC) of the engine 10, and is used to measure the torque produced and/or transmitted by any one or more of the rotational components of the engine 10 during operation, including for example the torque generated by a power turbine of the turbine section 18 and transmitted to the RGB 31 via the output shaft 18A.

Referring to Fig. 2, the TQMS 50 generally includes a probe 20 and two sets of toothed wheels 52, 56, which may also be configured as two sets of teeth, that are located in proximity to each other and to the probe 20. The probe 20 may also be referred to herein as a torque probe, and is understood to be an electrical device that can detect, in conjunction with the suitable electronics and/or software algorithms of the controller 100, the passing of a tooth. More particularly, the first toothed wheel 52 (or first set of teeth 52) is mounted on or connected to a loaded shaft 54. A first, or rearward, end 47 of the loaded shaft 54 is connected to and drivingly engaged with the output shaft 18A of the engine 10, such that torque generated by the engine is transmitted from the output shaft 18A of the core of the engine 10 to the loaded shaft 54 of the TQMS 50. The opposite end of the loaded shaft 54 of the TQMS 50, namely a second, or forward, end 49 of the loaded shaft 54, is connected to and drivingly engaged with an input gear 35 of the RGB 31. The loaded shaft 54 may also be referred to as a loaded torque tube. A second toothed wheel 56 (or second set of teeth 56) is mounted on or connected to a reference tube 58 of the TQMS 50, which may also be referred to as a reference torque tube or unloaded shaft. The torque reference tube 58 is hollow and is axially concentric with the loaded shaft 54 relative to central axis 11. The torque reference tube 58 is located radially outward of the loaded shaft 54, with a annular gap 57 located radially outward of the loaded shaft 54 and radially inward of the torque reference tube 58.

The torque probe 20 is operable, during operation of the engine 10, to detect the passing teeth of the first and second sets of teeth 52, 56, thereby determining relative rotational displacement between the first set of teeth 52 and the second set of teeth 56, in a manner that will be understood by those skilled in the art. Typically, one end of the second shaft (e.g., the reference tube 58) is fixedly connected to the other end of the first shaft (e.g., the load shaft 54), the second shaft member being tubular and concentric with the first shaft, the second shaft (reference tube 58) being elastically deformable in response to the magnitude of the torque being transmitted between the output shaft 18A of the engine 10 and the RGB 31, and the torque probe measures the relative phase displacement between the teeth on the two shafts and thus the magnitude of torque. The measured time which passes between teeth and/or between teeth sets is thus captured by the torque probe 20. This information is collected and used by the TQMS 50 and/or the EEC 100, in a manner well understood in the art, to determine torque produced by the engine and thus transmitted by the loaded shaft 54 to the downstream RGB 31.

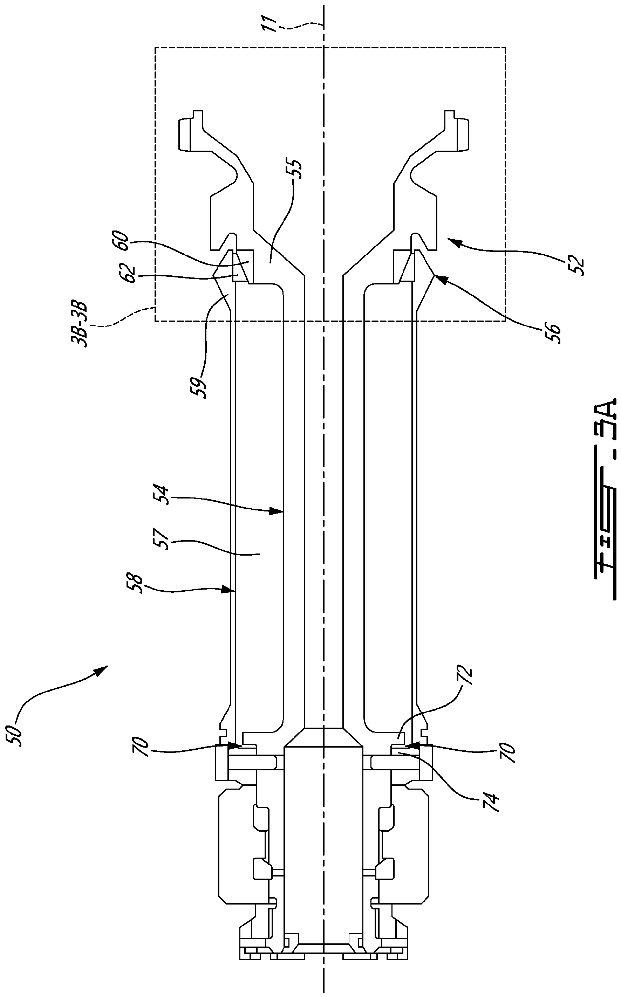

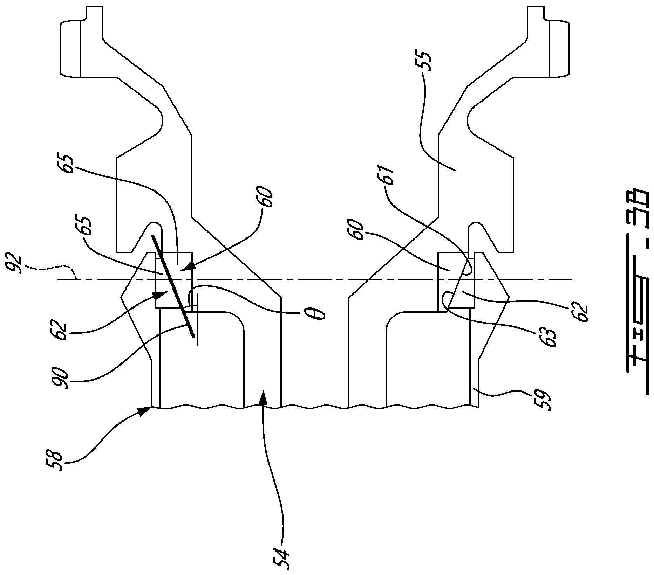

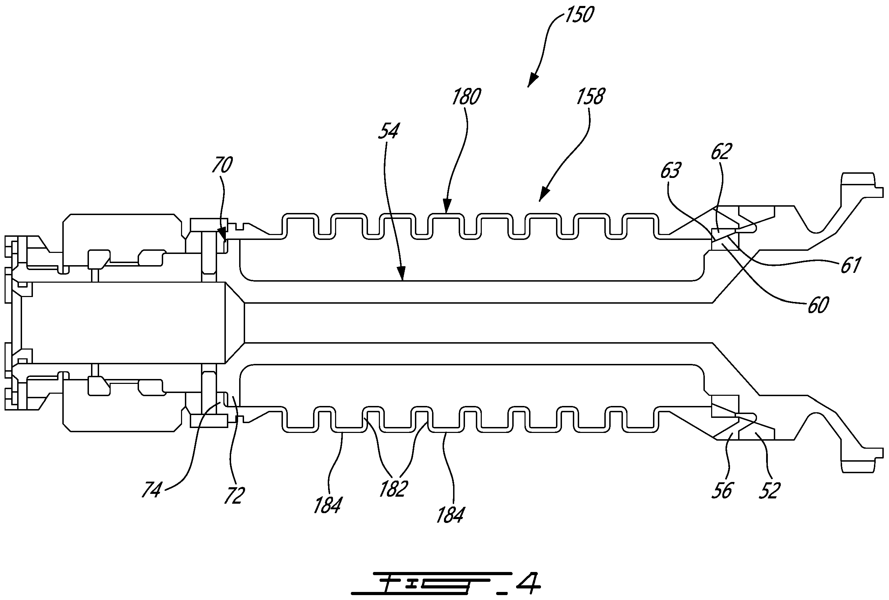

It bears noting, for proper understanding, that the second toothed wheel 56 (i.e., the second set of teeth 56) on the reference tube 58 are not completely shown in Figs. 3A and 3B, because the cut plane of this particular cross-section is taken at a location where the teeth are not present. In Figs. 2 and 4, these second set of teeth 56 are visible (and shown using dotted lines in Fig. 2).

The two toothed wheels 52, 56 may be located within or adjacent to a cavity of the engine 10, such as the bearing cavity 42 for example. As such, each of these toothed wheels is mechanically coupled to a respective shaft or other rotating component, such that concurrent rotation of each toothed wheel and its respective rotating component occurs (i.e., that there is no relative rotation between the tooth wheel and the rotating component to which it is mounted).

In existing torque measurement systems, any unnecessary relative movement between the two toothed wheels 52, 56 could lead to inexact torque measurement. For example, it is possible that the torque probe 20 and thus the TQMS 50 cannot readily distinguish between relative tooth movement caused by transmitted torque from relative tooth movement caused by relative radial movement of the two sets of teeth (which can lead to increased tooth spacing or reductions in tooth spacing near the torque probe 20 - but where these spacing differences are not caused by transmitted torque, but rather unwanted relative movement - radial or otherwise, between the two sets of teeth). Non-torque produced radial movement between the two toothed wheels can be caused, for example, by the bending moment loads generated in the system by the rotating propeller 12. More specifically, such relative radial movement can occur because of a trunnion moment input at the propeller shaft 19 (e.g., a 1P moment). This moment may cause a planet carrier of the RGB 31 to move radially and thus induce a bending moment and shear force in the loaded shaft 54. Thus, the loaded shaft 54 can take on a slight curvature while the reference tube 58 remains straight. If note accounted for, over the length of the TQMS such a bending moment force would cause relative radial displacement of the tooth sets 52, 56. It is therefore desirable to be able to minimize the relative radial displacement (e.g., away from the center axis 11 of the engine 10) of the loaded shaft 54 and the reference tube 58 of the TQMS 50, and thus their respective sets of teeth 52, 56.

Referring now to Figs. 3A and 3B, the present TQMS 50 includes at least one frustoconical element 60, 62 (which may also be referred to as "conical" elements, even if they may not include a purely conical shape - i.e. ending in a point). As will be described, the frustoconical element 60, 62 are configured to limit or minimize relative radial displacement between the loaded shaft 54 and the reference tube 58, and thus between their respective sets of teeth 52, 56 captured by the torque probe 20. As seen in Fig. 3B, each frustoconical element includes annular body 65, mounted to one of the loaded shaft 54 and the reference tube 58, that is wedge shaped and defined by a frustoconical surface 61, 63 facing towards the other of the loaded shaft 54 and the reference tube 58. The frustoconical surface 61, 63 is disposed at an angle relative to the central axis 11, and forms a running surface against which a complementary frustoconical surface abuts for relative rotation therebetween. The abutting frustoconical surfaces 61, 63 define a contact interface therebetween. Given the angular nature of the frustoconical surfaces 61, 63, this contact interface defined where the two surfaces abut is annular and oriented at an angle (that is, a non-zero angle) relative to the central axis. The contact interface is understood not to be horizontal and thus not parallel to the central axis.

In the embodiment of Figs. 3A-3B, two frustoconical elements 60 and 62 are provided, however it is to be understood that a single frustoconical element may be provided, and disposed on either of the loaded shaft 54 or the reference tube 58. The frustoconical elements 60 and 62 have annular bodies 65, and thus may also be referred to as rings, that are complementary and can rotate relative to each other while remaining in abutted contact. More particularly, the two annular rings 60 and 62 having complementary frustoconical surfaces 61, 63 that slide on each other as two annular rings 60, 62 rotate relative to one another.

In the depicted embodiment, the first frustoconical element 60 is fixed in position on the loaded shaft 54 and the second frustoconical element 62 is fixed in position on the reference tube 58, at the same end of each (e.g. the respective input ends 55 and 59 of the loaded shaft 54 and the reference tube 58). The frustoconical elements 60, 62 have angular frustoconical surfaces 61, 63 (which may also be referred to as wedge surfaces), respectively, that abut each other and permit relative rotation therebetween. The two frustoconical surfaces 61, 63 can rotate relative to each other, and are complementary such that they fit together in a mated arrangement. More particularly, in the depicted embodiment, the first frustoconical surface 61 of the first frustoconical element 60 faces radially outward and axially forward (e.g., towards the RGB 31), whereas the second frustoconical surface 63 of the second frustoconical element 62 faces radially inward and axially rearward (e.g., towards the engine output shaft 18A of the engine). The mating frustoconical surfaces 61 and 63 are disposed at an angle θ, and define a contact interface 90 (see Fig. 3B) where the two surfaces meet in abutting contact. When viewed in a longitudinal cross-section as shown in Figs. 3A-3B, the contact interface 90, and thus the angle of the mating frustoconical surfaces 61, 63, may thus be disposed at the angle θ (which is an acute angle measured relative to the horizontally extending central axis 11). In certain embodiments, the angle θ defined by the contact interface 90, when viewed in the section view of Figs. 3A-3B, is greater than 0 and less than 45 degrees. In certain more specific embodiments, this angle θ is between 20 and 30 degrees relative to the horizontally extending central axis 11. It however remains possible to select the appropriate angle for this contact interface 90 such as to optimize friction vs. radial control.

The frustoconical elements 60, 62 are oriented in opposite directions, such that the angled or frustoconical surface 61 on the first frustoconical element 60 abuts the angled or frustoconical surface 63 (e.g., a complementary running surface) on the second frustoconical element 62, as best seen in Fig. 3B, to define the contact interface 90 where the two surfaces meet in abutting contact. The contact interface 90 is disposed at an acute angle relative to the central axis 11, the contact interface 90 forming an imaginary annular conic surface when rotated about the central axis 11. When the two frustoconical elements 60 and 62 are mated together such that they are axially aligned in an axial plane 92 that is perpendicular to the central axis 11, their respective frustoconical surfaces 61 and 63 abut one another thereby limiting relative radial and axial displacement of the two frustoconical elements 60, 62, and therefore between the two shafts 54 and 58 to which they are mounted.

In order to reduce friction and thus minimize any potential torque transmission between the frustoconical elements 60, 62, the frustoconical elements 60, 62 (or at least their respective frustoconical surfaces 61, 63) may be formed of Teflon^{™} or another suitable low-friction material, such as an oil impregnated bronze for example. Further, the frustoconical element(s) may be lubricated during operation of the engine, e.g. at the interface formed by the mating frustoconical surfaces 61, 63, which may be useful if the frustoconical elements 60, 62 are formed of a metallic material. If the frustoconical elements 60, 62 are formed of a plastic or Teflon^{™} material, centrifugal loads during operation of the engine may cause the inner ring 62 to lift-off and further abut against the corresponding frustoconical surface 61 of the outer ring 60.

As will be seen in the depicted embodiment of Figs. 3A-3B, these two frustoconical elements 60, 62 are located proximate to the first and second sets of teeth 52, 56 of the TQMS 50. In certain embodiments, the first and second sets of teeth 52, 56 are at least partially axially aligned with, and therefore least partially overlaps, the frustoconical elements 60, 62. Or stated differently, the frustoconical surfaces 61, 63 of the frustoconical elements 60, 62 are at least partially axially aligned with (i.e., they at least partially axially overlap) one or both of the first and second sets of teeth 52, 56. For example, as seen in Figs. 3A-3B, the second set of teeth 56 on the reference tube 58 are axially aligned with the first and second frustoconical elements 60, 62, wherein the second set of teeth 56, the first frustoconical element 60 and the second frustoconical element 62 are all located in (or are intersected by) a common axial plane 92 that is perpendicular to the central axis 11.

Although in the depicted embodiment two frustoconical elements 60, 62 are provided, one mounted on the loaded shaft 54 and the other mounted on the reference tube 58, it is to be understood that in certain alternate embodiments it is possible to provide only one of the frustoconical elements, mounted for example on one of the two shafts 54, 58. In this embodiment, the angled or conical wedge surface of the frustoconical element will abut against, and rotate relative to, another complementary running surface. In the depicted embodiment, the frustoconical of the opposed and mating frustoconical element forms this complimentary running surface.

Referring back to Fig. 3A, an axial locating element 70 may also be provided, for at a forward (gearbox) end of the TQMS 50. In the depicted embodiment, the axial locating element 70 is an axial shim 70, located between an annular flange 72 extending radially outward from the loaded shaft 54 and an opposing flange 74 extending radially inward from the reference tube 58. This axial shim 70 is selected, at the time of assembly of the TQMS 50, to have a size (and more specifically, an axial thickness) that ensures that the two frustoconical elements 60, 62 at the other end of the TQMS 50 are precisely axially and radially aligned. Any potential gap between the mating frustoconical surfaces 61, 63 (see Fig. 3B) can accordingly be minimized. Additionally, the axial shim 70 may be selected to have an axial thickness that will cause a slight preload (i.e., an axial preload) between the frustoconical elements 60, 62.

The axial locating element 70 may alternately be other components, rather than a shim. For example, in an alternate embodiment the axial locating element 70 includes a threaded element used to axially position and/or lock the TQMS 50 in place. In another alternate embodiment, the axial locating element 70 includes a biasing or spring-like element (e.g., a Belleville washer, for example) which provides additional axial compliance and maintains appropriate axial pre-load.

Because the reference tube 58 of the TQMS 50 is compliant by design, it does not have a high axial stiffness. Consequently, any relative movements between the reference tube 58 and the loaded shaft 54 of the TQMS 50 will not develop high axial loads or friction, due to the presence of the mating frustoconical elements 60, 62 at the rearward end of the shafts 58, 54 proximate the torque probe 20. The abutting frustoconical surfaces 61, 63 are conical and complementary, and may be formed to have an angle that is optimized to provide a desired level of axial and/or radial force imposed on the reference tube 58 by the loaded shaft 54, or vice versa.

Referring now to Fig. 4, a TQMS 150 is depicted which is similar to the TQMS 50 as described above, but with a torque reference tube 158 having a different design. Like components between the TQMS 150 and the TQMS 50 having been given the same reference numbers, but will not be explained again in detail hereinbelow.

The torque reference tube 158 of the TQMS 150 is configured in a manner such that it is axial flexible, in that it is capable of absorbing axial loads (e.g., it is able to elastically deform when an axial load is applied thereto). While it is to be understood that the torque reference tube 58 defined above will also be capable of absorbing a certain amount of axial loads, the configuration of the torque reference tube 158 is such that it will be able to absorb greater axial loads, and thus will be more elastically deflectable in the axial direction relative to the torque reference tube 58. In the particular embodiment as shown in Fig. 4, the torque reference tube 158 has a plurality of undulations. More particularly, the torque reference tube 158 includes annular wall 180 that is located radially outward of the loaded shaft 54, the annular wall 180 being formed by plurality of interconnected and integrally formed wall segments 182 and 184. The radially extending wall segments 182 and the axially extending wall segments 184 alternate and are serially connected together to form the undulating, or crenulated, annular wall 180 of the torque reference tube 158.

Each radially extending wall segment 182 introduces locations in the annular wall 180 of the torque reference tube 158, that, taken together, will develop a high axial compliance that can minimize the axial forces developed at the interface plane defined between the frustoconical surfaces 61, 63 of the frustoconical elements 60, 62, while still introducing enough preload to ensure these frustoconical surfaces 61,63 track together. Ensuring a preload is maintained on the frustoconical surfaces 61, 63 may also help to minimize any errors which might otherwise be caused due to unbalanced forces acting on the torque reference tube 158. Finally, as the mating frustoconical surfaces 61, 63 of the frustoconical elements 60, 62 will be subject to wear over time, due to normal use of the engine 10, the frustoconical surfaces 61, 63 and the axial preload (generated by the axial shim 70, for example) will maintain the surfaces in contact for reasonable amounts of material loss from wear.

The present systems may permit reduced torque measurement error, by limiting relative radial movement between the two toothed wheels. By limiting relative radial movement between the two toothed wheels, there will be less change in tooth spacing near the torque probe caused by bending moment, meaning that the measured relative movement of the teeth will be more accurately representative of torque.

Various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the following description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A torque measurement system (50; 150) for an aircraft propulsor (10) including a reduction gearbox (31), comprising:
a first toothed wheel (52) mounted to a loaded shaft (54) of the torque measurement system (50; 150), the loaded shaft (54) being rotatable about a central axis (11) and having an input end (47) configured to be driven by an output shaft (18A) of the aircraft propulsor (10) and an output end (49) configured to transmit torque to the reduction gearbox (31);
a second toothed wheel (56) mounted to a torque reference tube (58; 158) radially spaced apart from the loaded shaft (54) and concentric therewith;
a torque probe (20) located proximate the first toothed wheel (52) and the second toothed wheel (56), the torque probe (20) configured to be in communication with a controller (100) of the aircraft propulsor (10) for determining the torque transmitted by the output shaft (18A) based on a difference in relative position between teeth on the first and second toothed wheels (52, 56); and
a frustoconical element (60, 62) located proximate the input end (47) of the loaded shaft (54), the frustoconical element (60, 62) comprising an annular body (65) radially disposed between the loaded shaft (54) and the torque reference tube (58; 158) and being mounted to one of the loaded shaft (54) and the torque reference tube (58; 158) for rotation therewith, the frustoconical element (60, 62) including a frustoconical surface (61, 63) facing towards the other of the loaded shaft (54) and the torque reference tube (58; 158) and abutting a complementary running surface, wherein the frustoconical surface (61, 63) of the frustoconical element (60, 62) and the complementary running surface are configured to rotate relative to each other and define a contact interface (90), the contact interface (90) being annular and oriented at an angle (θ) relative to the central axis (11).

2. The torque measurement system as defined in claim 1, wherein the frustoconical element (60, 62) is a first frustoconical element (60) fixed to the loaded shaft (54), and the torque measurement system (50; 150) includes a second frustoconical element (62) fixed to the torque reference tube (58; 158), the complementary running surface being a second frustoconical surface (63) of the second frustoconical element (62).

3. The torque measurement system as defined in claim 2, wherein the frustoconical surface (61) of the first frustoconical element (60) faces radially outward toward the torque reference tube (58; 158), and the second frustoconical surface (63) of the second frustoconical element (62) facing radially inward toward the loaded shaft (54).

4. The torque measurement system as defined in claim 2 or 3, wherein the frustoconical surface (61) of the first frustoconical element (60) faces axially forward and the second frustoconical surface (63) of the second frustoconical element (61) faces axially rearward.

5. The torque measurement system as defined in any preceding claim, wherein the angle (θ) of the contact interface (90) is an acute angle relative to the central axis (11).

6. The torque measurement system as defined in claim 5, wherein the angle (θ) is between 0 and 45 degrees.

7. The torque measurement system as defined in claim 6, wherein the angle (θ) is between 20 and 30 degrees.

8. The torque measurement system as defined in any preceding claim, wherein the frustoconical surface (61, 63) of the frustoconical element (60, 62) and the complementary running surface at least partially axially overlap the teeth on the first toothed wheel (52) and/or the second toothed wheel (56).

9. The torque measurement system as defined in claim 8, wherein a common axial plane (92) that is perpendicular to the central axis (11) intersects all of: the teeth on the first toothed wheel (52); the teeth on the second toothed wheel (56); the frustoconical surface (60); and the complementary running surface.

10. The torque measurement system as defined in any preceding claim, further comprising an axial locating element (70) located proximate to the output end (49) of the loaded shaft (54), the axial locating element (70) acting between an annular flange (72) on the loaded shaft (54) and an opposing flange (74) on the torque reference tube (58; 158).

11. The torque measurement system as defined in claim 10, wherein the axial locating element (70) is an axial shim that (70) has an axial thickness configured to generate an axial preload force between the frustoconical surface (61, 63) and the complementary running surface.

12. The torque measurement system as defined in any preceding claim, wherein the torque reference tube (158) includes an annular wall (180) that has a plurality of undulations therein.

13. The torque measurement system as defined in claim 12, wherein the annular wall (180) of the torque reference tube (158) is crenulated and formed by a plurality of interconnected and integrally formed axially extending wall segments (184) and radially extending wall segments (182).

14. A torque measurement system (50; 150) for an aircraft propulsor (10), comprising:
a first shaft (54) having a first set of teeth (52) fixed thereto, the first shaft (54) being rotatable about a central axis (11);
a second shaft (58; 158) concentrically disposed relative to the first shaft (54) and being radially spaced apart therefrom, the second shaft (58; 158) having a second set of teeth (56) fixed thereto;
a torque probe (20) located proximate the first set of teeth (52) and the second set of teeth (56), the torque probe (20) configured for determining torque transmitted by the first shaft (54) based on a difference in relative position between first set of teeth (52) and the second set of teeth (56); and
a first frustoconical element (60) mounted on the first shaft (54) and having a first frustoconical surface (61) thereon, and a second frustoconical element (62) mounted on the second shaft (58; 158) and having a second frustoconical surface (63) thereon, the first and second frustoconical elements (60, 62) rotating relative to each other with the first and second frustoconical surfaces (61, 63) abutting each other.

15. The torque measuring system as defined in claim 14, wherein the first and second frustoconical surfaces (61, 63) define a contact interface (90) therebetween, the contact interface (90) being annular and oriented at an angle (θ) relative to the central axis (11).
